# EUROPEAN PATENT APPLICATION

(11) **EP 1 993 308 A1**
(43) Date of publication of application: **19.11.2008**
(21) Application number: 07009608.6
(22) Date of filing: 14.05.2007
(51) Int. Cl.: H04Q 7/38

(54) **Method for allocating, by a first telecommunication device, resource blocks of a group of resource blocks of a channel resource to a second and a third telecommunication devices**

(71) Applicant: Mitsubishi Electric Information Technology Centre Europe B.V., 1119 NS Schiphol Rijk (NL); MITSUBISHI ELECTRIC CORPORATION, Chiyoda-ku Tokyo 100-8310 (JP)
(72) Inventor: Voyer, Nicolas, 35708 Rennes Cedex 7 (FR)
(74) Representative: Maillet, Alain

(57) **Abstract**

The present invention concerns a method for allocating, by a first telecommunication device, resource blocks of a group of resource blocks of a channel resource to a second and a third telecommunication devices, each resource block being identified by a position in the group of resource blocks. The first telecommunication device:
- allocates at least one resource block to the third telecommunication device,
- allocates at least two resource blocks to the second telecommunication device, at least one resource block allocated to the second telecommunication device having a position lower than the position of the or each resource block allocated to the third telecommunication device and at least one resource block allocated to the second telecommunication device having a position higher than the position of the or each resource block allocated to the third telecommunication device,
- transfers a message comprising at least a first information enabling the determination of the position of the or each resource block allocated to the third telecommunication device and a second information enabling the determination of the position of the at least two resource blocks allocated to the second telecommunication device.

## Description

The present invention relates to a method for allocating, by a first telecommunication device, resource blocks of a group of resource blocks of a channel resource to a second and a third telecommunication devices.

In some classical wireless cellular telecommunication networks, a base station communicates with at least one mobile terminal which is located within the coverage area of the base station. The base station allocates parts of the telecommunication network channel resource to the mobile terminal.

The channel resource is defined as the amount of frequency bandwidth, time, or spatial dimensions if the base station and the mobile terminals have several antennas. A part of the channel resource is named hereinafter a resource block. A resource block is a predefined subdivision of the channel resource.

Each resource block is composed of resource elements of the channel resource. As example, in case of single-antenna OFDM transmission, a resource element is a tone or sub-carrier of an OFDM symbol.

A resource block is either allocated for downlink and/or uplink transmission. A downlink transmission is a transmission from the base station to one or several mobile terminals. An uplink transmission is a transmission from a mobile terminal to the base station.

The base station needs to indicate to each mobile terminal which resource block or blocks is or are allocated to the mobile terminal. When plural resource blocks are allocated to a mobile terminal, these resource blocks are consecutive or not.

By allocating plural non consecutive resource blocks to a mobile terminal, the base station takes profit of the diversity of the channel resources. If the quality of transmission on one resource block is deteriorated, as example by interferences generated by electric apparatus, or by the frequency selectivity of the radio propagation channel, the quality of transmission on other resource block or blocks has a low probability to be deteriorated as they are not closed to the resource block on which the quality of transmission is deteriorated. One drawback of non consecutive resource blocks allocation scheme is the amount of information which need to be transferred by the base station to each mobile terminal. The identification of each resource block assigned to a given mobile terminal needs to be signalled to the given mobile terminal and as a result, the remaining throughput on the downlink channel used for the transfer of data is reduced.

By allocating plural consecutive resource blocks to a mobile terminal, the amount of information which need to be transferred by the base station to each mobile terminal is reduced. But the base station doesn't take profit of the diversity of the channel resources. If the quality of transmission on one resource block is deteriorated, as example by interferences generated by electric apparatus, or by the frequency selectivity of the radio propagation channel, the quality of transmission on other resource block or blocks has a high probability to be deteriorated as they are closed to the resource block on which the quality of transmission is deteriorated.

The aim of the invention is therefore to propose a method and a device which enable the allocation of non consecutive resource blocks to a telecommunication device without having to identify each allocated resource block.

To that end, the present invention concerns a method for allocating, by a first telecommunication device, resource blocks of a group of resource blocks of a channel resource to a second and a third telecommunication devices, each resource block being a predefined subdivision of the channel resource, each resource block being identified by a position in the group of resource blocks, characterised in that the method comprises the successive steps executed by the first telecommunication device of:
- allocating at least one resource block to the third telecommunication device,
- allocating at least two resource blocks to the second telecommunication device, at least one resource block allocated to the second telecommunication device having a position lower than the position of the or each resource block allocated to the third telecommunication device and at least one resource block allocated to the second telecommunication device having a position higher than the position of the or each resource block allocated to the third telecommunication device,
- transferring a message comprising at least a first information enabling the determination of the position of the or each resource block allocated to the third telecommunication device and a second information enabling the determination of the position of the at least two resource blocks allocated to the second telecommunication device.

The present invention concerns also a device for allocating resource blocks of a group of resource blocks of a channel resource, each resource block being a predefined subdivision of the channel resource, each resource block being identified by a position in the group of resource blocks, the device for allocating resource blocks being included in a first telecommunication device and the telecommunication devices to which resource blocks are allocated being a second and a third telecommunication devices, characterised in that the device for allocating resource blocks comprises:
- means for allocating at least one resource block to the third telecommunication device,
- means allocating at least two resource blocks to the second telecommunication device, at least one resource block allocated to the second telecommunication device having a position lower than the position of the resource block allocated to the third telecommunication device and at least one resource block allocated to the second telecommunication device having a position higher than the position of the resource block allocated to the third telecommunication device,
- means for transferring a message comprising at least a first information enabling the determination of the position or positions of the at least one resource block allocated to the third telecommunication device and a second information enabling the determination of the position of the at least two resource blocks allocated to the second telecommunication device.

Thus, non consecutive resource blocks are allocated to the second telecommunication device without having to identify each resource block allocated to the second telecommunication device.

According to a particular feature, the first telecommunication device, prior to the allocation of resource blocks to the second telecommunication device :
- allocates at least one resource block to at least a fourth telecommunication device,
   and the resource block having the lowest position allocated to the second telecommunication device has a position lower than the position of each resource block allocated to the third and the or each fourth telecommunication device and the resource block having the highest position allocated to the second telecommunication device has a position higher than the position of each resource block allocated to the third and the or each fourth telecommunication device and the message further comprises at least a third information enabling the determination of the position of the or each resource block allocated to the at least one fourth telecommunication device.

Thus, non consecutive resource blocks are allocated to the second telecommunication device without having to identify each allocated resource block.

According to a particular feature, each resource block which is not allocated to the third or to the or each fourth telecommunication device and which has a position comprised between the resource block allocated to the second telecommunication device which has the lowest position and the resource block allocated to the second telecommunication device which has the highest position is allocated to the second telecommunication device.

Thus, non consecutive resource blocks are allocated to the second telecommunication device without having to identify each allocated resource block.

According to a particular feature, the information are comprised in the transferred message according to the order of allocation of resource blocks to the second, third and fourth telecommunication devices.

Thus, the second telecommunication device is able to determine which information has to be used prior other information.

According to a particular feature, the number of resource blocks allocated to the second telecommunication device is predetermined and the second information is the position of one resource block allocated to the second telecommunication device.

Thus, the amount of information identifying the allocated resource blocks is minimized.

According to a particular feature, the message further comprises a fourth information indicating the number of resource blocks allocated to the second telecommunication device.

Thus, the number of allocated resource blocks can vary and be adapted to the channel quality conditions and the required traffic devoted to the second telecommunication device. The usage of the channel resource is then optimised.

According to a particular feature, the second information is representative of the position of the resource block having the smallest or the highest position among the positions of the resource blocks allocated to the second telecommunication device.

Thus, the second telecommunication device can easily determine which resource blocks is allocated to it.

According to a particular feature, the second information is dependent of the position of resource blocks previously allocated to other telecommunication devices.

Thus, as the size of the set of resource blocks not yet allocated is smaller that the set of all resource blocks, the signalling used to carry the position can be minimised. The channel capacity devoted to traffic is enhanced.

According to a particular feature, the second information is the position of one resource block allocated to the second telecommunication device and the position of each other resource block allocated to the second telecommunication is determined modulo the number of resource blocks of the channel resource or modulo the number of resource blocks of the channel resource which has not been allocated to telecommunication devices.

Thus, non consecutive resource blocks are allocated to the second telecommunication device without having to identify each allocated resource block.

According to still another aspect, the present invention concerns a method for determining the position of at least two resource blocks allocated by a first telecommunication device to a second telecommunication device, the resource blocks being resource blocks of a group of resource blocks of a channel resource, each resource block being a predefined subdivision of the channel resource, each resource block being identified by a position in the group of resource blocks, characterised in that the method comprises the steps executed by the second telecommunication device of:
- receiving a message comprising at least a first information enabling the determination of the position of at least one resource block allocated to a third telecommunication device and a second information enabling the determination of the position of the resource blocks allocated to the second telecommunication device,
- determining the resource blocks allocated to the second telecommunication device according to the at least first information and the second information.

The present invention concerns also a device for determining the position of at least two resource blocks allocated by a first telecommunication device to a second telecommunication device, the resource blocks being resource blocks of a group of resource blocks of a channel resource, each resource block being a predefined subdivision of the channel resource, each resource block being identified by a position in the group of resource blocks, characterised in that the device for determining the position of at least two resource blocks is included in the second telecommunication device and comprises :
- means for receiving a message comprising at least a first information enabling the determination of the position of at least one resource block allocated to a third telecommunication device and a second information enabling the determination of the position of one of the resource block allocated to the second telecommunication device,
- means for determining the resource blocks allocated to the second telecommunication device according to the first and second information.

Thus, non consecutive resource blocks are allocated to the second telecommunication device without having to identify each allocated resource block.

According to a particular feature, the number of resource blocks allocated to the second telecommunication device is predetermined.

Thus, the amount of information identifying the allocated resource blocks is minimized.

According to a particular feature, the determination of the resource blocks allocated to the second telecommunication device is executed by:
- determining the at least one resource block allocated to the third telecommunication device from the at least first information,
- determining a group of available resource blocks from the group of resource blocks and each resource block allocated to the or each third telecommunication device,
- determining the resource blocks allocated to the second telecommunication device according to the group of available resource blocks and the second information.

Thus, the determination of the resource blocks allocated to the second telecommunication device is simple to realize and does not need complex signalling.

According to a particular feature, the determined resource blocks allocated to the second telecommunication device are consecutive resource blocks in the determined group of available resource blocks.

Thus, the signalling used for locating the determined resource blocks in the determined group of available resource blocks is minimised. A large number of resource blocks can be allocated to the second terminal even in case the initial set of radio resource was fragmented due to previous allocation to a large set of third telecommunication device.

According to a particular feature, the message further comprises a third information indicating the number of resource blocks allocated to the second telecommunication device and resource blocks allocated to the second telecommunication device are determined according to the first, the second and the third information.

Thus, the number of allocated resource blocks can vary and be adapted to the channel quality conditions and the required traffic devoted to the second telecommunication device. The usage of the channel resource can be optimised.

According to a particular feature, the second information is representative of the position of the resource block having the smallest or the highest position among the positions of the resource blocks allocated to the second telecommunication device.

Thus, the second telecommunication device can easily determine which resource blocks it is being allocated.

According to a particular feature, the determination of the resource blocks allocated to the second telecommunication device is executed by:
- determining the at least one resource block allocated to the third telecommunication device from the at least first information,
- determining a group of available resource blocks from the group of resource blocks and each resource block allocated to the third telecommunication device,
- determining the resource blocks allocated to the second telecommunication device according to the group of available resource blocks, the second and third information.

Thus, the determination of the resource blocks allocated to the second telecommunication device is simple to realize and does not need complex signalling.

According to a particular feature, the determined resource blocks allocated to the second telecommunication device are consecutive resource blocks in the determined group of available resource blocks.

Thus, the signalling used for locating the determined resource blocks in the determined group of available resource blocks is minimised. A large number of resource blocks can be allocated to the second telecommunication device even in case the initial set of radio resource was fragmented due to previous allocation to a large set of third telecommunication devices.

According to still another aspect, the present invention concerns computer programs which can be directly loadable into a programmable device, comprising instructions or portions of code for implementing the steps of the methods according to the invention, when said computer programs are executed on a programmable device.

Since the features and advantages related to the computer programs are the same as those set out above related to the method and device according to the invention, they will not be repeated here.

The characteristics of the invention will emerge more clearly from a reading of the following description of an example embodiment, the said description being produced with reference to the accompanying drawings, among which:
Fig. 1 is a diagram representing the architecture of a telecommunication network in which the present invention is implemented ;
Fig. 2 is a block diagram of a first telecommunication device according to the present invention ;
Fig. 3 is a block diagram of a second telecommunication device according to the present invention;
Fig. 4 depicts an algorithm executed by the first telecommunication device according to the present invention ;
Fig. 5 depicts an algorithm executed by the second telecommunication device according to the present invention;
Fig. 6a is a first mode of realisation of a management of a list of available resource blocks according to the present invention ;
Fig. 6b is a second mode of realisation of a management of a list of available resource blocks according to the present invention.

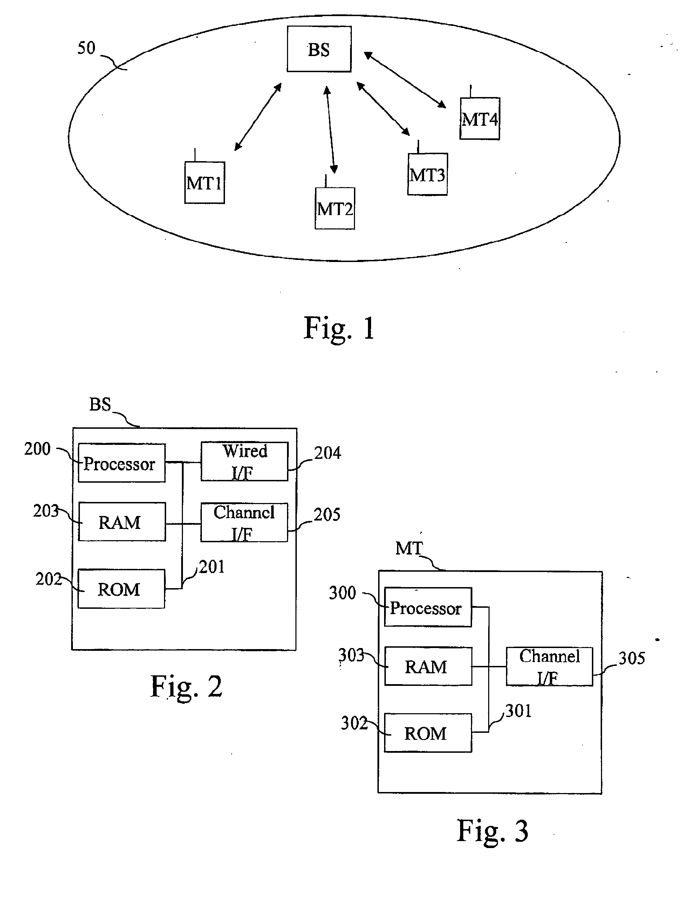

**Fig. 1** is a diagram representing the architecture of a telecommunication network in which the present invention is implemented.

The present invention will be described in a wireless network like a wireless cellular network or a local area network but the present invention is also applicable to wired networks like power line networks or digital subscriber lines as ADSL.

Only one coverage area 50 of a first telecommunication device BS is shown in the Fig. 1 for the sake of simplicity but in practice, and especially when the wireless network is a wireless cellular network, the wireless cellular telecommunication network is composed of a more important number of first telecommunication devices BS and coverage areas 50.

In the telecommunication network of the Fig. 1, at least one and preferably plural second telecommunication devices MT1, MT2, MT3 and MT4 are comprised in the coverage area 50 of the first telecommunication device BS.

Only four second telecommunication devices MT are shown in the Fig. 1 for the sake of simplicity but in practice, a more important number of second telecommunication devices MT are in the coverage area 50 of the first telecommunication device BS.

The first telecommunication device BS is also named a node B or a node or an enhanced node B or an access point or a base station.

The second telecommunication devices MT are as example mobile phones, personal digital assistants or personal computers or computer peripheral devices.

According to the example of the Fig. 1, the first telecommunication device BS intends to communicate with at least one second telecommunication device MTi with i=1 to 4. For that, the first telecommunication device BS allocates parts of the telecommunication network channel resource to the second telecommunication devices MT.

The channel resource is defined as the amount of frequency bandwidth, time, or spatial dimensions if the first telecommunication device BS and the second telecommunication devices MT have several antennas. A part of the channel resource is named hereinafter a resource block. A resource block is a predefined subdivision of the channel resource.

Each resource block is composed of resource elements of the channel resource. As example, in case of single-antenna OFDM transmission, a resource element is a tone or sub-carrier of an OFDM symbol.

The first telecommunication device BS needs to indicate to each second telecommunication device MT which resource block or blocks is or are allocated to the second telecommunication device MT for downlink and/or uplink transmission.

One or plural resource blocks are allocated to a given second telecommunication device MT, as example according to the distance separating the first telecommunication device BS and the second telecommunication device MT or according to the attenuation or interference which exist in the communication link between the first telecommunication device BS and the second telecommunication device MT or according to the amount of data to be transferred.

**Fig. 2** is a block diagram of a first telecommunication device according to the present invention.

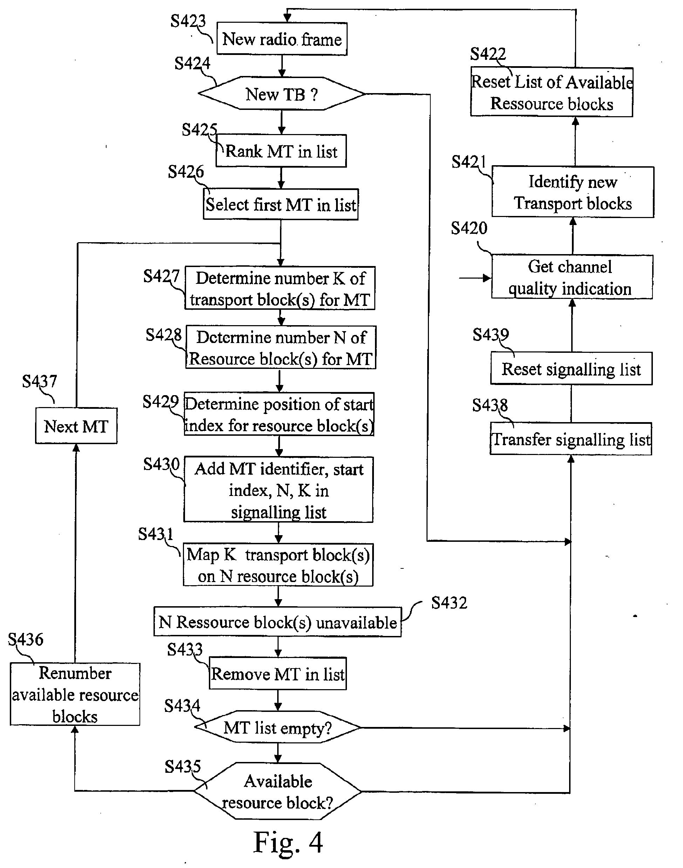

The first telecommunication device BS has, for example, an architecture based on components connected together by a bus 201 and a processor 200 controlled by the program related to the algorithm as disclosed in the Fig. 4.

It has to be noted here that the first telecommunication device BS is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, a wired interface I/F 204 and a channel interface I/F 205.

The read only memory ROM 202 contains instructions of the programs related to the algorithm as disclosed in the Fig. 4 which are transferred, when the first telecommunication device BS is powered on to the random access memory RAM 203.

The RAM memory 203 contains registers intended to receive variables, and the instructions of the programs related to the algorithm as disclosed in the Fig. 4.

The channel interface I/F 205 can be used by the processor 200 to exchange information with each second telecommunication device MT. It can be either a wireless communication interface, or a wired interface such as power line communication or digital subscriber line.

The wired interface I/F 204 enables the first telecommunication device BS to communicate with other telecommunication devices of the telecommunication network like other first telecommunication devices BS or network management devices not shown in the Fig. 1.

**Fig. 3** is a block diagram of a second telecommunication device according to the present invention.

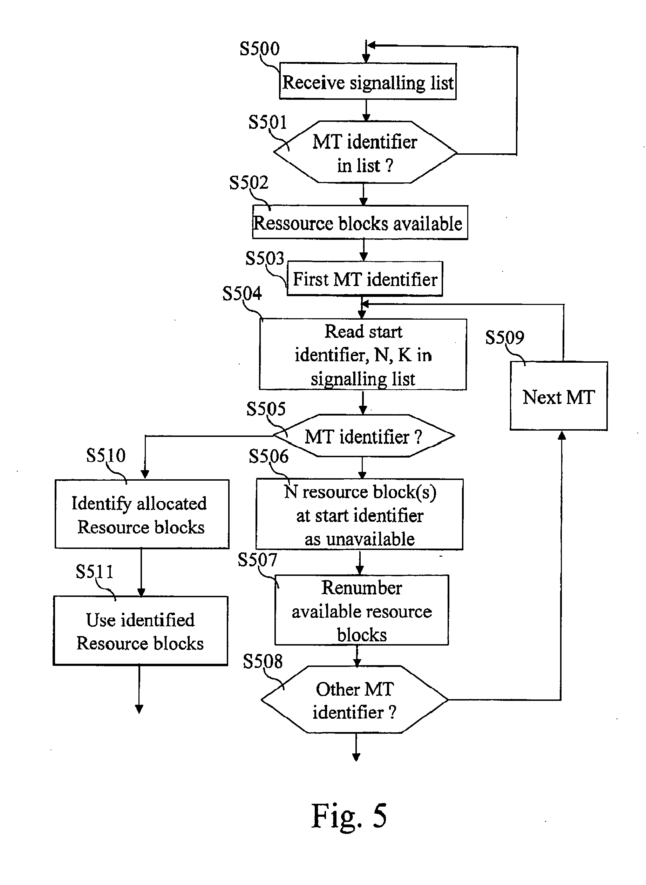

Each second telecommunication device MT has, for example, an architecture based on components connected together by a bus 301 and a processor 300 controlled by the program related to the algorithm as disclosed in the Fig. 5.

It has to be noted here that the second telecommunication devices MT are, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303 and a channel interface I/F 305.

The read only memory ROM 302 contains instructions of the programs related to the algorithm as disclosed in the Fig. 5 which are transferred, when the second telecommunication device MT is powered on to the random access memory RAM 303.

The RAM memory 303 contains registers intended to receive variables, and the instructions of the programs related to the algorithm as disclosed in the Fig. 5.

The channel interface I/F 305 can be used by the processor 300 to exchange information with the first telecommunication device BS. It can be either a wireless communication interface, or a wired interface such as power line communication or digital subscriber line.

**Fig. 4** depicts an algorithm executed by the first telecommunication device according to the present invention.

The present algorithm is more precisely executed by the processor 200 of the first telecommunication device BS.

At step S420, the processor 200 gets channel quality indications for each second telecommunication device MT and for each resource block of the downlink and/or the uplink channel.

At next step S421, the processor 200 gets the number of transport blocks to be mapped in the following frame for each second telecommunication device MT. In the downlink channel, the number of transport blocks to be mapped in the following frame is derived from the data packets received through the wired interface I/F 204. In the uplink channel, the number of transport blocks to be mapped is reported by each second telecommunication device MT through the channel interface I/F 205.

At next step S422, the processor 200 resets the list of available resource blocks to the set of all the resource blocks in the frame except the ones allocated to broadcast or paging, Broadcast Control Channel or Multimedia Broadcast Multicast Service ...

At step S423, a new frame has to be transferred by the first telecommunication device BS through the downlink channel.

At next step S424, the processor 200 checks if there are transport blocks to be mapped in the new frame. If there are transport blocks to be mapped in the new frame, the processor 200 moves to step S425. If there is no transport blocks to be mapped in the new frame, the processor 200 moves to step S438.

As there are transport blocks to be mapped for the second telecommunication devices MT1 to MT4, the processor moves to step S425.

At next step S425, the processor 200 ranks the second telecommunication devices MT1 to MT4 for which transport blocks have to be mapped, in a list of second telecommunication devices MT.

The processor 200 ranks the second telecommunication devices MT as example according to the channel quality indications obtained for each second telecommunication device MT for the uplink channel and/or the downlink channel and/or, for downlink allocation, according to the number of transport blocks to be transferred to each second telecommunication device MT and/or, for uplink allocation, according to the number of transport blocks to be transferred by each second telecommunication device MT.

The channel quality indications, the number of transport blocks are obtained at steps S420 and S421.

As example, the second telecommunication device MT1 is the first in the list of second telecommunication devices MT, the second telecommunication device MT2 is the second in the list of second telecommunication devices MT, the second telecommunication device MT3 is the third in the list of second telecommunication devices MT and the second telecommunication device MT4 is the fourth in the list of second telecommunication devices MT.

At next step S426, the processor 200 selects the first second telecommunication device MT in the list of second telecommunication devices MT, i.e. the second telecommunication device MT1.

At next step S427, the processor 200 determines the number K of transport blocks for the selected second telecommunication device MT.

As example, the determined number K of transport blocks for the selected second telecommunication device MT is equal to the number of transport blocks to be mapped for the second telecommunication device MT, as obtained at step S421.

As other example, the determined number K is the lowest value between the achievable number of transport blocks which can be transmitted over the remaining number of resource blocks and the number of transport blocks to be mapped for the second telecommunication device MT.

As other example, the determined number K is the lowest value between a fixed value and the number of transport blocks to be mapped for the second telecommunication device MT.

As yet other variant, the number K is determined so as to leave a chance to each second telecommunication device MT in the list to have few transport blocks mapped in the new radio frame.

At next step S428, the processor 200 determines the number of resource blocks to be allocated to the selected second telecommunication device MT. The allocated resource blocks are consecutive resource blocks in the list of available resource blocks.

For the downlink channel, the number of resource blocks is determined according to the channel quality indications obtained from each second telecommunication device MT for downlink channel and according to the number of transport blocks to be transferred to the second telecommunication device MT, determined at previous step S427.

For the uplink channel, the number of resource blocks is determined according to the channel quality indications for uplink channel and/or according to the number of packets to be transferred by each second telecommunication device MT.

The number of resource blocks, on which are mapped the number of transport blocks determined at step S427, is the result of the Adaptive Modulation and Coding (AMC) function, which selects the appropriate modulation and coding scheme as the function of the Channel Quality Indication (CQI) of the communication channel between the first telecommunication device BS and the second telecommunication device MT over the allocated resource blocks for the downlink channel and/or between the second telecommunication device MT and the first telecommunication device BS over the allocated resource blocks for uplink channel.

As example, the processor 200 determines that five resource blocks are allocated to the second telecommunication device MT1.

It has to be noted here that, in a variant, the processor 200 doesn't executes the steps S427 and S428, K and N having a predetermined value.

At next step S429, the processor 200 determines a start index of the allocated resource blocks. As example, the start index corresponds to the lowest position of the resource blocks which maximise the sum of CQI values over the N consecutive resource blocks in the list of available resource blocks.

It has to be noted here that in a variant, the start index of the allocated resource blocks corresponds to the highest position of the resource blocks which maximise the sum of CQI values over the N consecutive resource blocks in the list of available resource blocks.

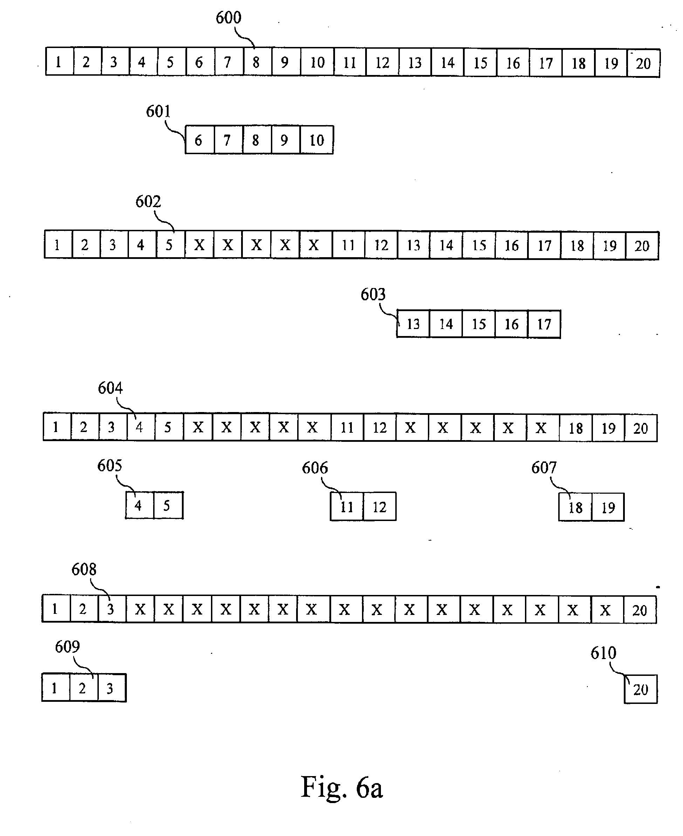

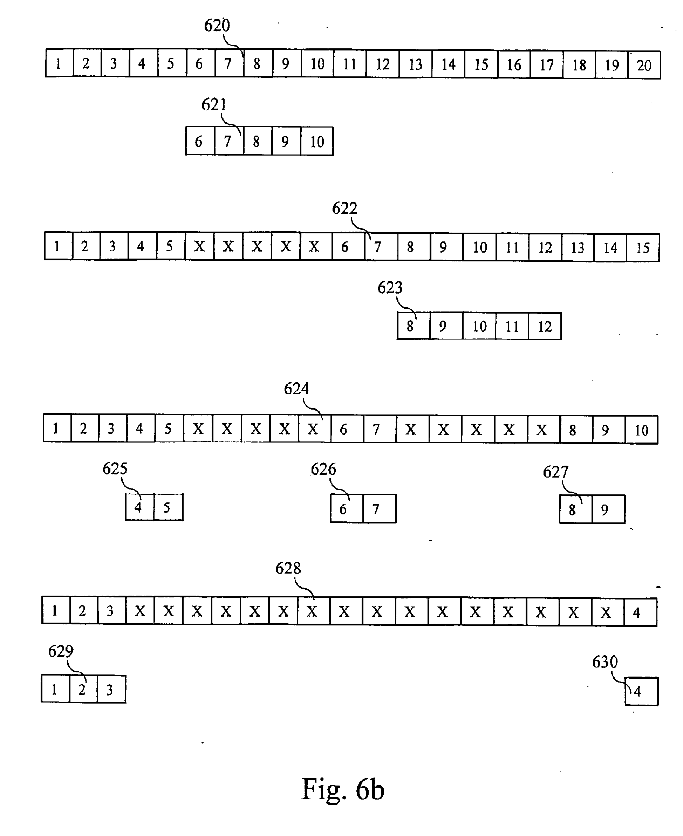

As example, the resource blocks allocated to the second telecommunication device MT1 are shown in the line noted 601 in the Fig. 6a or the line noted 621 in the Fig. 6b.

**Fig. 6a** is a first mode of realisation of a management of a list of available resource blocks according to the present invention.

The line 600 of shows an example wherein twenty resource blocks are available for an allocation to second telecommunication devices MT. Available resource blocks are all the resource blocks in the frame except the ones allocated to broadcast or paging, Broadcast Control Channel or Multimedia Broadcast Multicast Service ...

**Fig. 6b** is a second mode of realisation of a management of a list of available resource blocks according to the present invention.

The line 620 of shows an example wherein twenty resource blocks are available for an allocation to second telecommunication devices MT. Available resource blocks are all the resource blocks in the frame except the ones allocated to broadcast or paging, Broadcast Control Channel or Multimedia Broadcast Multicast Service ...

The five resource blocks allocated to the second telecommunication device MT1 are noted 6 to 10. 6 to 10 correspond to their position within the available resource blocks.

The start index is then equal, according to the examples of the Figs. 6a and 6b, equal to 6.

It has to be noted here that, resource blocks have a position in the group of resource blocks or the group of available resource blocks modulo the number of resource blocks in the group of resource blocks or the group of available resource blocks.

It has to be noted here that, the resource blocks noted 20 and 1 are considered, according to the present invention, as consecutive resource blocks. In other words, if the start index is equal to 20 and N=2, the consecutive resource blocks 20 and 21 are consecutive resource blocks allocated to a second telecommunication device MT. As they are only twenty resource blocks, 21 modulo 20 is equal to 1, i.e. the resource blocks 20 and 21 are allocated to the second telecommunication device MT.

At next step S430, the processor 200 adds the identifier of the selected second telecommunication device MT, the determined start index, N and K in a signalling list.

An identifier of a second telecommunication device MT is an information which uniquely identifies the second telecommunication device MT among the other second telecommunication devices MT comprised in the coverage area 50 of the first telecommunication device BS or is an information which uniquely identifies the second telecommunication device MT among the other second telecommunication devices MT comprised in at least a part of the telecommunication network.

According to the variant of realisation, K and N are not included in the signalling list as far as they arc predetermined and known by the first and second telecommunication devices.

If the present algorithm is executed for the downlink channel, the processor 200 moves from step S430 to step S431. If the present algorithm is executed for the uplink channel, the processor 200 moves from step S430 to step S432.

At next step S431, the processor 200 commands the channel interface I/F 205 to map the K transport blocks or block on the N resource blocks or block and moves to step S432.

At step S432, the processor 200 sets the resource blocks allocated to the selected second telecommunication device MT at step S429 as unavailable.

According to the first mode of realisation of the Fig. 6a, the list of available resource blocks is then equal to the one shown in the line 602. Each unavailable resource block is marked by a cross.

According to the second mode of realisation of the Fig. 6b, the list of available resource blocks is then equal to the one shown in the line 622. Each unavailable resource block is marked by a cross.

At next step S433, the processor 200 removes the identifier of the selected second telecommunication device MT in the list of second telecommunication devices.

At next step S434, the processor 200 checks if the list of second telecommunication devices is empty.

If the list of second telecommunication devices is empty, the processor 200 moves to step S438. Otherwise, the processor 200 moves to step S435.

As the identifiers of the second telecommunication devices MT2 to MT4 are in the list of second telecommunication devices, the processor 200 moves to step S435.

At step S435, the processor 200 checks if there is at least one available resource block.

If there is no available resource block, the processor 200 moves to step S438. Otherwise, the processor 200 moves to the step S436 according to the second mode of realisation of the Fig. 6b or moves to the step S437 according to the first mode of realisation of the Fig. 6a

In the first mode of realisation of the Fig. 6a, each unavailable resource block is marked by a cross and the available resource blocks are numbered according to their position in the line 600.

At step S436, the processor 200 renumbers the available resource blocks. The available resource blocks are renumbered according to their position in the list of available resource blocks. The resource blocks which have a position starting at 11 and ending at 20 in the line 620 have a respective position starting at 6 and ending at 15 in the line 622. After that, the processor 200 moves to step S437.

At step S437, the processor 200 selects another second telecommunication device MT in the list of second telecommunication devices. The processor 200 selects the second telecommunication device MT2 ranked as the first in the list of second telecommunication devices.

The processor 200 executes the loop constituted by the steps S427 to S437 for the second telecommunication devices MT2 to MT4.

According to the Figs. 6a and 6b, the processor 200 determines that five consecutive available resource blocks are allocated to the second telecommunication device MT2. The resource blocks allocated to the second telecommunication device MT2 are shown in the line noted 603 in the Fig. 6a or the line noted 623 in the Fig. 6b. The start index is equal, according to the Fig. 6a, to 13 or the start index is equal, according to the Fig. 6b, to 8. The processor 200 adds the identifier of the second telecommunication device MT2, the determined start index, N and K in a signalling list at the second position in the signalling list. According to the Fig. 6a, the list of available resource blocks is then equal to the one shown in the line 604. Each unavailable resource block is marked by a cross.

According to the variant of realisation, K and N arc not included in the signalling list as far as they are predetermined and know by the first and second telecommunication devices.

According to the Fig. 6b, the list of available resource blocks is then equal to the one shown in the line 624. Each unavailable resource block is marked by a cross.

The processor 200 removes the identifier of the second telecommunication device MT2 in the list of second telecommunication devices.

According to the Fig. 6b, the processor 200 renumbers the available resource blocks. The resource blocks which have a position starting at 13 and ending at 15 in the line 622 have a respective position starting at 8 and ending at 10 in the line 624.

According to the Figs. 6a and 6b, the processor 200 determines that six consecutive available resource blocks are allocated to the second telecommunication device MT3. The resource blocks allocated to the second telecommunication device MT3 are shown in the lines noted 605, 606 and 607 in the Fig. 6a or the lines noted 625, 626 and 627 in the Fig. 6b. The start index is equal, according to the example of the Figs. 6a and 6b, to 4. The processor 200 adds the identifier of the second telecommunication device MT3, the determined start index, N and K in a signalling list at the third position in the signalling list. According to the example of the Fig. 6a, the list of available resource blocks is then equal to the one shown in the line 608. Each unavailable resource block is marked by a cross.

According to the variant of realisation, K and N are not included in the signalling list as far as they are predetermined and know by the first and second telecommunication devices.

According to the Fig. 6b, the list of available resource blocks is then equal to the one shown in the line 628. Each unavailable resource block is marked by a cross.

The processor 200 removes the identifier of the second telecommunication device MT3 in the list of second telecommunication devices.

According to the Fig. 6b, the processor 200 renumbers the available resource blocks. The resource block which has the position 10 has the position 4 the line 628.

According to the Figs. 6a and 6b, the processor 200 determines that four consecutive available resource blocks are allocated to the second telecommunication device MT4. The resource blocks allocated to the second telecommunication device MT4 are shown in the lines noted 609 and 610 in the Fig. 6a or the lines noted 629 and 630 in the Fig. 6b. The start index is equal, according to the example of the Figs. 6a and 6b, to 1. The processor 200 adds the identifier of the second telecommunication device MT4, the determined start index, N and K in the signalling list at the fourth position in the signalling list.

According to the variant of realisation, K and N are not included in the signalling list as far as they are predetermined and know by the first and second telecommunication devices.

The processor 200 removes the identifier of the second telecommunication device MT4 in the list of second telecommunication devices and moves to step S438.

At step S438, the processor 200 commands the transfer of the signalling list in a frame through the downlink channel.

At next step S439, the processor 200 resets the signalling list to an empty list.

The processor 200 returns then to step S420.

**Fig. 5** depicts an algorithm executed by the second telecommunication device according to the present invention.

The present algorithm is executed by the processor 300 of each second telecommunication device MT. The present algorithm will be disclosed when it is executed by the processor 300 of the second telecommunication device MT4.

At step S500, the processor 300 is notified of the reception through the channel interface 305 of the signalling list transferred at step S438 of the algorithm of the Fig. 4.

At step S501, the processor 300 checks if the identifier of the second telecommunication device MT is comprised in the signalling list.

If the identifier of the second telecommunication device MT is not comprised in the signalling list, the processor 300 returns to step S500 and waits for the reception through the channel interface 305 of another signalling list.

If the identifier of the second telecommunication device MT is comprised in the signalling list, the processor 300 moves to step S502.

At step S502, the processor 300 marks the resource blocks as available. The list of available resource blocks is equal to the one shown in line 600 of the Fig. 6a or the one shown in line 620 of the Fig. 6b.

At step S503, the processor 300 selects the identifier of second telecommunication device MT, which is located first in the signalling list, i.e. the identifier of the second telecommunication device MT1.

The identifiers of second telecommunication devices MT are comprised or included in the transferred signalling list according to the order of allocation, by the first telecommunication device BS, of resource blocks to the second telecommunication devices MT.

At next step S504, the processor 300 reads the start index, N and K in the signalling list which are associated to the identifier selected at step S503.

According to the variant, the processor 300 reads N and K in the RAM memory 303.

At next step S505, the processor 300 checks if the selected identifier is the identifier of the second telecommunication device MT4.

If the selected identifier is the identifier of the second telecommunication device MT4, the processor 300 moves to step S510. Otherwise, the processor 300 moves to step S506.

As the identifier of the second telecommunication devices MT1 and MT4 are different, the processor 300 moves to step S506.

At step S506, the processor 300 sets the N resource blocks starting at the read start index as unavailable in the list of available resource blocks.

According to the Fig. 6a, the list of available resource blocks is then equal to the one shown in the line 602. Each unavailable resource block is marked by a cross.

According to the Fig. 6b, the list of available resource blocks is then equal to the one shown in the line 622. Each unavailable resource block is marked by a cross.

The processor 300 moves then to step S508 according to the first mode of realisation or moves to step S507 according to the second mode of realisation.

At step S507, the processor 300 renumbers the available resource blocks. The available resource blocks are renumbered according to their position in the list of available resource blocks. The resource blocks which have a position starting at 11 and ending at 20 in the line 620 have a respective position starting at 6 and ending at 15 in the line 622. After that, the processor 300 moves to step S508.

At next step S508, the processor 300 checks if there are some identifiers of second telecommunication device MT which have not been selected.

If all the identifiers of second telecommunication devices MT have been selected, the processor 300 returns to step S500 and waits for the reception of a new signalling list. If at least one identifier of a second telecommunication device MT has not been selected, the processor 300 moves to step S509 and selects the following identifier in the signalling list.

The processor 300 executes the loop constituted by the steps S504 to S508 as far as the identifier of the second telecommunication device MT4 is not selected.

The processor 300 selects the identifier of the second telecommunication device MT2, reads the determined start index in the signalling list, N and K which are associated to the identifier of the second telecommunication device MT2 and sets the N resource blocks starting at the read start index as unavailable in the list of available resource blocks.

According to the Fig. 6a, the list of available resource blocks is then equal to the one shown in the line 604. Each unavailable resource block is marked by a cross.

According to the Fig. 6b, the list of available resource blocks is then equal to the one shown in the line 624. Each unavailable resource block is marked by a cross.

According to the Fig. 6b, the processor 300 renumbers the available resource blocks which have a position starting at 13 and ending at 25 in the line 622 to a respective position starting at 8 and ending at 10 in the line 624.

The processor 300 selects the identifier of the second telecommunication device MT3, reads the determined start index in the signalling list, N and K which are associated to the identifier of the second telecommunication device MT3 and sets the N resource blocks starting at the read start index as unavailable in the list of available resource blocks.

According to the Fig. 6a, the list of available resource blocks is then equal to the one shown in the line 608. Each unavailable resource block is marked by a cross.

According to the Fig. 6b, the list of available resource blocks is then equal to the one shown in the line 628. Each unavailable resource block is marked by a cross.

According to the Fig. 6b, the processor 300 renumbers the available resource block which has the position 10 in the line 624 to the position 4 in the line 628.

The processor 300 selects the identifier of the second telecommunication device MT4, moves from step S505 to S510, reads the determined start index in the signalling list, N and K which are associated to the identifier of the second telecommunication device MT4 and identifies the N resource blocks starting at the read start index as the resource blocks allocated to the second telecommunication device MT4.

At next step S511, the processor 300 uses the identified resource blocks. If the allocated resource blocks are for the downlink channel, the processor 300 commands the channel interface 305 to de-map the K transport blocks or block on the N resource blocks or block.

If the allocated resource blocks are for the uplink channel, the processor 300 commands the channel interface 305 to map the K transport blocks or block on the N resource blocks or block.

Naturally, many modifications can be made to the embodiments of the invention described above without departing from the scope of the present invention.

## Claims

1. Method for allocating, by a first telecommunication device, resource blocks of a group of resource blocks of a channel resource to a second and a third telecommunication devices, each resource block being a predefined subdivision of the channel resource, each resource block being identified by a position in the group of resource blocks, **characterised in that** the method comprises the successive steps executed by the first telecommunication device of:
- allocating at least one resource block to the third telecommunication device,
- allocating at least two resource blocks to the second telecommunication device, at least one resource block allocated to the second telecommunication device having a position lower than the position of the or each resource block allocated to the third telecommunication device and at least one resource block allocated to the second telecommunication device having a position higher than the position of the or each resource block allocated to the third telecommunication device,
- transferring a message comprising at least a first information enabling the determination of the position of the or each resource block allocated to the third telecommunication device and a second information enabling the determination of the position of the at least two resource blocks allocated to the second telecommunication device.

2. Method according to claim 1, **characterised in that** the method comprises further step executed by the first telecommunication device prior to the allocation of resource blocks to the second telecommunication device of:
- allocating at least one resource block to at least a fourth telecommunication device,
and **in that** the resource block having the lowest position allocated to the second telecommunication device has a position lower than the position of each resource block allocated to the third and the or each fourth telecommunication device and the resource block having the highest position allocated to the second telecommunication device has a position higher than the position of each resource block allocated to the third and the or each fourth telecommunication device and the message further comprises at least a third information enabling the determination of the position of the or each resource block allocated to the at least one fourth telecommunication device.

3. Method according to claim 2, **characterised in that** each resource block which is not allocated to the third or to the or each fourth telecommunication device and which has a position comprised between the resource block allocated to the second telecommunication device which has the lowest position and the resource block allocated to the second telecommunication device which has the highest position is allocated to the second telecommunication device.

4. Method according to claim 3, **characterised in that** the information are comprised in the transferred message according to the order of allocation of resource blocks to the second, third and fourth telecommunication devices.

5. Method according to any of the claims 1 to 3, **characterised in that** the number of resource blocks allocated to the second telecommunication device is predetermined and the second information is the position of one resource block allocated to the second telecommunication device.

6. Method according to any of the claims 2 to 4, **characterised in that** the message further comprises a fourth information indicating the number of resource blocks allocated to the second telecommunication device.

7. Method according to claim 6, **characterised in that** the second information is representative of the position of the resource block having the smallest or the highest position among the positions of the resource blocks allocated to the second telecommunication device.

8. Method according to any of the claims 1 to 7, **characterised in that** the second information is dependent of the position of resource blocks previously allocated to other telecommunication devices.

9. Method according to claim 1, **characterised in that** the second information is the position of one resource block allocated to the second telecommunication device and **in that** the position of each other resource block allocated to the second telecommunication is determined modulo the number of resource blocks of the channel resource or modulo the number of resource blocks of the channel resource which has not been allocated to telecommunication devices.

10. Method for determining the position of at least two resource blocks allocated by a first telecommunication device to a second telecommunication device, the resource blocks being resource blocks of a group of resource blocks of a channel resource, each resource block being a predefined subdivision of the channel resource, each resource block being identified by a position in the group of resource blocks, **characterised in that** the method comprises the steps executed by the second telecommunication device of:
- receiving a message comprising at least a first information enabling the determination of the position of at least one resource block allocated to a third telecommunication device and a second information enabling the determination of the position of the resource blocks allocated to the second telecommunication device,
- determining the resource blocks allocated to the second telecommunication device according to the at least first information and the second information.

11. Method according to claim 10 **characterised in that** the number of resource blocks allocated to the second telecommunication device is predetermined.

12. Method according to claim 11, **characterised in that** the determination of the resource blocks allocated to the second telecommunication device is executed by:
- determining the at least one resource block allocated to the third telecommunication device from the at least first information,
- determining a group of available resource blocks from the group of resource blocks and each resource block allocated to the third telecommunication device,
- determining the resource blocks allocated to the second telecommunication device according to the group of available resource blocks and the second information.

13. Method according to claim 12, **characterised in that** the determined resource blocks allocated to the second telecommunication device are consecutive resource blocks in the determined group of available resource blocks.

14. Method according to claim 10, **characterised in that** the message further comprises a third information indicating the number of resource blocks allocated to the second telecommunication device and **in that** the resource blocks allocated to the second telecommunication device are determined according to the first, the second and the third information.

15. Method according to the claim 14 **characterised in that** the second information is representative of the position of the resource block having the smallest or the highest position among the positions of the resource blocks allocated to the second telecommunication device.

16. Method according to claim 15, **characterised in that** the determination of the resource blocks allocated to the second telecommunication device is executed by:
- determining the at least one resource block allocated to the third telecommunication device from the at least first information,
- determining a group of available resource blocks from the group of resource blocks and each resource block allocated to the third telecommunication device,
- determining the resource blocks allocated to the second telecommunication device according to the group of available resource blocks, the second and third information.

17. Method according to 16, **characterised in that** the determined resource blocks allocated to the second telecommunication device are consecutive resource blocks in the determined group of available resource blocks.

18. Device for allocating resource blocks of a group of resource blocks of a channel resource, each resource block being a predefined subdivision of the channel resource, each resource block being identified by a position in the group of resource blocks, the device for allocating resource blocks being included in a first telecommunication device and the telecommunication devices to which resource blocks are allocated being a second and a third telecommunication devices, **characterised in that** the device for allocating resource blocks comprises:
- means for allocating at least one resource block to the third telecommunication device,
- means allocating at least two resource blocks to the second telecommunication device, at least one resource block allocated to the second telecommunication device having a position lower than the position of the resource block allocated to the third telecommunication device and at least one resource block allocated to the second telecommunication device having a position higher than the position of the resource block allocated to the third telecommunication device,
- means for transferring a message comprising at least a first information enabling the determination of the position or positions of the at least one resource block allocated to the third telecommunication device and a second information enabling the determination of the position of the at least two resource blocks allocated to the second telecommunication device.

19. Device for determining the position of at least two resource blocks allocated by a first telecommunication device to a second telecommunication device, the resource blocks being resource blocks of a group of resource blocks of a channel resource, each resource block being a predefined subdivision of the channel resource, each resource block being identified by a position in the group of resource blocks, **characterised in that** the device for determining the position of at least two resource blocks is included in the second telecommunication device and comprises :
- means for receiving a message comprising at least a first information enabling the determination of the position of at least one resource block allocated to a third telecommunication device and a second information enabling the determination of the position of one of the resource block allocated to the second telecommunication device,
- means for determining the resource blocks allocated to the second telecommunication device according to the first and second information.

20. Computer program which can be directly loadable into a programmable device, comprising instructions or portions of code for implementing the steps of the method according to claims 1 to 9, when said computer program is executed on a programmable device.

21. Computer program which can be directly loadable into a programmable device, comprising instructions or portions of code for implementing the steps of the method according to claims 10 to 17, when said computer program is executed on a programmable device.
